# EUROPEAN PATENT APPLICATION

(11) **EP 4 410 900 A1**
(43) Date of publication of application: **07.08.2024**
(21) Application number: 22875799.3
(22) Date of filing: 12.09.2022
(51) Int. Cl.: C08L 101/00, C08G 61/06, C08J 5/18, C08K 5/5397, C08L 23/00, C08L 65/00

(54) **FLAME-RETARDANT THERMOPLASTIC RESIN COMPOSITION, MOLDED BODY, AND STRETCHED FILM**

(30) Priority: 30.09.2021 JP 2021162172
(71) Applicant: Zeon Corporation, Tokyo 100-8246 (JP)
(72) Inventor: HAZEYAMA, Ichiro, Tokyo 100-8246 (JP); KANDA, Hideyuki, Tokyo 100-8246 (JP)
(74) Representative: Maiwald GmbH
(86) International application number: PCT/JP2022/034116
(87) International publication number: WO 2023/053927

(57) **Abstract**

Provided is a flame retardant thermoplastic resin composition having increased flame retardancy while also having improved moisture resistance. The flame retardant thermoplastic resin composition contains a thermoplastic resin and a bis(phosphine oxide) compound represented by the following formula (1). In formula (1), R¹ is an optionally substituted alkylene group, an optionally substituted arylene group, or a divalent organic group represented by a formula: -Q¹-Ar-Q²- (Ar is an optionally substituted arylene group and Q¹ and Q² are each, independently of each other, an optionally substituted alkylene group having a carbon number of not less than 1 and not more than 10), and R² to R⁵ are each, independently of one another, an optionally substituted alkyl group, an optionally substituted aryl group, or an optionally substituted alkoxy group.

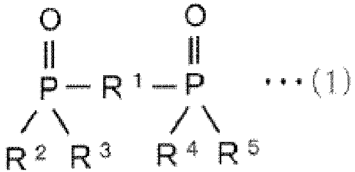

## Description

### TECHNICAL FIELD

The present disclosure relates to a flame retardant thermoplastic resin composition and also relates to a shaped product and a stretched film that are formed using this flame retardant thermoplastic resin composition.

### BACKGROUND

Flame retardant thermoplastic resin compositions that are obtained by adding a flame retardant to a thermoplastic resin such as a polymer obtained by further subjecting a cycloolefin ring-opened polymer obtained through ring-opening polymerization of a cycloolefin to a hydrogenation reaction (hereinafter, referred to as a "hydrogenated cycloolefin ring-opened polymer") are conventionally used as shaping materials for various shaped products having enhanced flame retardancy.

More specifically, flame retardant thermoplastic resin compositions that are obtained by adding a phosphoric flame retardant to a hydrogenated cycloolefin ring-opened polymer that is a thermoplastic resin excelling in terms of various properties such as low hygroscopicity, electrical insulation, and impact resistance are widely used as shaping materials for shaped products such as films (for example, refer to Patent Literature (PTL) 1 and 2). Moreover, an organic phosphinate flame retardant such as aluminum tris(diethylphosphinate) is used as a phosphoric flame retardant in PTL 1, whereas a phosphoric flame retardant having a decomposition temperature in a range of not lower than 100°C and not higher than 500°C, such as aluminum diethylphosphinate is used as a phosphoric flame retardant in PTL 2.

### CITATION LIST

### Patent Literature

PTL 1: JP2021-107508A
PTL 2: JP2014-101503A

### SUMMARY

### (Technical Problem)

However, the conventional flame retardant thermoplastic resin compositions described above leave room for improvement of moisture resistance.

Accordingly, one object of the present disclosure is to provide a flame retardant thermoplastic resin composition having increased flame retardancy while also having improved moisture resistance.

Another object of the present disclosure is to provide a shaped product and a stretched film having excellent flame retardancy and moisture resistance.

### (Solution to Problem)

The inventors conducted diligent investigation with the aim of solving the problem set forth above. The inventors discovered that by using a specific bis(phosphine oxide) compound as a flame retardant, it is possible to increase flame retardancy of a flame retardant thermoplastic resin composition while also improving moisture resistance of the flame retardant thermoplastic resin composition, and, in this manner, completed the present disclosure.

Specifically, the present disclosure aims to advantageously solve the problem set forth above, and a presently disclosed flame retardant thermoplastic resin composition comprises: a thermoplastic resin; and a bis(phosphine oxide) compound represented by formula (1), shown below. 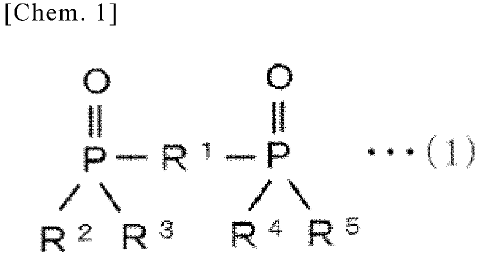 [In formula (1), R¹ is an optionally substituted alkylene group, an optionally substituted arylene group, or a divalent organic group represented by a formula: -Q¹-Ar-Q²- (Ar is an optionally substituted arylene group and Q¹ and Q² are each, independently of each other, an optionally substituted alkylene group having a carbon number of not less than 1 and not more than 10), and R² to R⁵ are each, independently of one another, an optionally substituted alkyl group, an optionally substituted aryl group, or an optionally substituted alkoxy group.]

When a bis(phosphine oxide) compound represented by the foregoing formula (1) is included as a phosphoric flame retardant in this manner, it is possible to increase flame retardancy of the flame retardant thermoplastic resin composition while also improving moisture resistance of the flame retardant thermoplastic resin composition.

Note that the term "optionally substituted" as used in the present disclosure means "unsubstituted or having one or more substituents".

In the presently disclosed flame retardant thermoplastic resin composition, R² to R⁵ are preferably each, independently of one another, an optionally substituted aryl group. By using a bis(phosphine oxide) compound for which R² to R⁵ in formula (1) are each an optionally substituted aryl group, it is possible to further improve flame retardancy and moisture resistance of the flame retardant thermoplastic resin composition.

In the presently disclosed flame retardant thermoplastic resin composition, content of the bis(phosphine oxide) compound is preferably 17.5 parts by mass or less per 100 parts by mass of the thermoplastic resin. When the content of the bis(phosphine oxide) compound is not more than the upper limit set forth above, it is possible to further improve moisture resistance and obtain a flame retardant thermoplastic resin composition with which physical properties of the thermoplastic resin (for example, low hygroscopicity, electrical insulation, and impact resistance) are sufficiently displayed.

In the presently disclosed flame retardant thermoplastic resin composition, the thermoplastic resin is preferably a polyolefin resin, and, in particular, is preferably a hydrogenated cycloolefin ring-opened polymer. This is because polyolefin resins, and particularly hydrogenated cycloolefin ring-opened polymers are materials having low environmental impact and excellent formability.

In the presently disclosed flame retardant thermoplastic resin composition, the thermoplastic resin is preferably crystalline. By using a thermoplastic resin that is crystalline, it is possible to obtain a flame retardant thermoplastic resin composition having excellent chemical resistance and heat resistance. Moreover, by using a thermoplastic resin that is crystalline, it is possible to sufficiently improve heat resistance even with a small amount of the bis(phosphine oxide) compound.

Note that when a thermoplastic resin is referred to as "crystalline" in the present disclosure, this means that a crystallization temperature is detected as an exothermic peak in a temperature range of not lower than a glass-transition point and not higher than a melting point by differential scanning calorimetry (DSC) in accordance with JIS K7121.

Moreover, the present disclosure aims to advantageously solve the problem set forth above, and a presently disclosed shaped product is obtained through shaping of any one of the flame retardant thermoplastic resin compositions set forth above. By using the flame retardant thermoplastic resin composition set forth above, it is possible to obtain a shaped product having excellent flame retardancy and moisture resistance.

Furthermore, the present disclosure aims to advantageously solve the problem set forth above, and a presently disclosed stretched film is formed using any one of the flame retardant thermoplastic resin compositions set forth above. By using the flame retardant thermoplastic resin composition set forth above, it is possible to obtain a stretched film having excellent flame retardancy and moisture resistance.

### (Advantageous Effect)

According to the present disclosure, it is possible to provide a flame retardant thermoplastic resin composition having increased flame retardancy while also having improved moisture resistance.

Moreover, according to the present disclosure, it is possible to provide a shaped product having excellent flame retardancy and moisture resistance and a stretched film having excellent flame retardancy and moisture resistance.

### DETAILED DESCRIPTION

The following provides a detailed description of embodiments of the present disclosure.

The presently disclosed flame retardant thermoplastic resin composition can be used as a material of the presently disclosed shaped product or stretched film, for example, but is not specifically limited thereto. Moreover, the presently disclosed stretched film can suitably be used as a substrate of a flexible flat cable or the like, for example, but is not specifically limited thereto.

### (Flame retardant thermoplastic resin composition)

The presently disclosed flame retardant thermoplastic resin composition contains a thermoplastic resin and a specific bis(phosphine oxide) compound, and optionally further contains other components such as additives. The presently disclosed flame retardant thermoplastic resin composition has excellent flame retardancy and moisture resistance as a result of containing the specific bis(phosphine oxide) compound.

### <Thermoplastic resin>

The thermoplastic resin is a resin component that serves as a base material of the flame retardant thermoplastic resin composition. In general, the thermoplastic resin serving as the base material of the flame retardant thermoplastic resin composition is readily combustible, and a burning rating in accordance with the UL-94 VTM standard for the thermoplastic resin by itself may be "Sub-standard", but is not specifically limited thereto.

The thermoplastic resin may be a polyolefin resin such as a polyethylene resin, a polypropylene resin, a polymethylpentene resin, a cycloolefin polymer (cycloolefin addition polymer or cycloolefin ring-opened polymer), or a hydrogenated cycloolefin polymer; a polyester resin such as polyethylene terephthalate or polybutylene terephthalate; a polystyrene resin; a polycarbonate resin; an acrylonitrile-butadiene-styrene copolymer (ABS resin); or the like, for example, without any specific limitations. Of these examples, a polyolefin resin is preferable from a viewpoint of having low environmental impact and good formability, a cycloolefin polymer or a hydrogenated cycloolefin polymer is more preferable, and a hydrogenated cycloolefin ring-opened polymer is particularly preferable from a viewpoint of excelling in terms of various properties such as low hygroscopicity, electrical insulation, and impact resistance.

Note that one thermoplastic resin may be used individually, or two or more thermoplastic resins may be used in combination.

A hydrogenated cycloolefin ring-opened polymer that is suitable as the thermoplastic resin is obtained by performing ring-opening polymerization of a cycloolefin as a monomer to obtain a cycloolefin ring-opened polymer and then further subjecting the cycloolefin ring-opened polymer to a hydrogenation reaction.

The cycloolefin used to produce the cycloolefin ring-opened polymer can be a compound that includes an alicyclic structure in a molecule thereof and that also includes a carbon-carbon double bond in the alicyclic structure. For example, a monomer including a norbornene ring structure (hereinafter, also referred to as a "norbornene-based monomer") can suitably be used as the cycloolefin. Note that one cycloolefin may be used individually, or two or more cycloolefins may be used in combination.

A compound indicated by the following formula can suitably be used as a norbornene-based monomer.

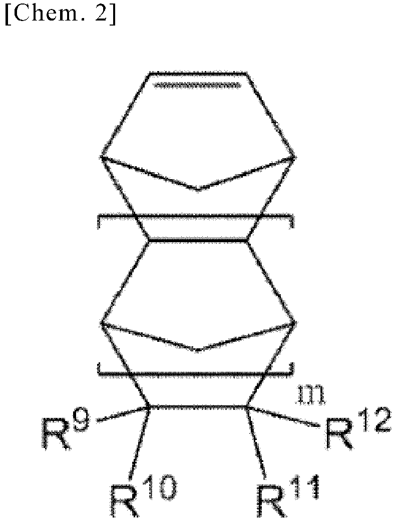

In the formula, R⁹, R¹⁰, R¹¹, and R¹² each represent, independently of one another, a hydrogen atom; a halogen atom; an optionally substituted hydrocarbon group having a carbon number of not less than 1 and not more than 20; or a substituent including at least one selected from the group consisting of a silicon atom, an oxygen atom, and a nitrogen atom. Two groups selected from R⁹, R¹⁰, R¹¹, and R¹² may bond to form a ring (for example, a monocycle or fused ring that may be an aromatic ring or non-aromatic ring). Moreover, m in the formula represents 0, 1, or 2.

Examples of the halogen atom of R⁹ to R¹² include a fluorine atom, a chlorine atom, and a bromine atom.

Examples of the hydrocarbon group having a carbon number of not less than 1 and not more than 20 of R⁹ to R¹² include alkyl groups such as a methyl group, an ethyl group, an n-propyl group, an isopropyl group, an n-butyl group, an isobutyl group, a sec-butyl group, a t-butyl group, an n-pentyl group, an isopentyl group, an n-hexyl group, an n-heptyl group, an n-octyl group, an n-nonyl group, and an n-decyl group; cycloalkyl groups such as a cyclopropyl group, a cyclobutyl group, a cyclopentyl group, a cyclohexyl group, and a cycloheptyl group; alkenyl groups such as a vinyl group, a 1-propenyl group, an allyl group, a 1-butenyl group, a 2-butenyl group, a pentenyl group, a hexenyl group, and a cyclohexenyl group; alkynyl groups such as an ethynyl group, a 1-propynyl group, a 2-propynyl (propargyl) group, a 3-butynyl group, a pentynyl group, and a hexynyl group; aryl groups such as a phenyl group, a tolyl group, a xylyl group, a biphenylyl group, a 1-naphthyl group, a 2-naphthyl group, an anthryl group, and a phenanthryl group; aralkyl groups such as a benzyl group and a phenethyl group; and alkylidene groups such as a methylidene group, an ethylidene group, and a propylidene group. Examples of optional substituents of the hydrocarbon group having a carbon number of not less than 1 and not more than 20 include halogen atoms such as a fluorine atom and a chlorine atom; and alkoxy groups such as a methoxy group and an ethoxy group. Note that the hydrocarbon group having a carbon number of not less than 1 and not more than 20 may include just one of these types of substituents or may include two or more of these types of substituents.

Examples of the substituent including at least one selected from the group consisting of a silicon atom, an oxygen atom, and a nitrogen atom of R⁹ to R¹² include a silyl group (trimethylsilyl group, triethylsilyl group, tert-butyldimethylsilyl group, triisopropylsilyl group, etc.), a sulfo group, a hydroxy group, a carbonyl group, a nitro group, an amino group, an imino group, a cyano group, an azo group, and an azide group.

Two groups among R⁹ to R¹² (for example, R⁹ and R¹⁰, R¹¹ and R¹², or R⁹ and R¹¹) may combine to form a ring. A ring formed by two groups among R⁹ to R¹² may be a monocycle or fused ring that may be an aromatic ring or non-aromatic ring.

Specific examples of norbornene-based monomers include:
bicyclic monomers such as bicyclo[2.2.1]hept-2-ene (common name: norbornene), 5-ethylidene-bicyclo[2.2.1]hept-2-ene (common name: ethylidene norbornene), and derivatives thereof (derivatives including a substituent on a ring; same applies below);
tricyclic monomers such as tricyclo[4.3.0^{1,6}.1^{2,5}]deca-3,7-diene (common name: dicyclopentadiene) and derivatives thereof; and
tetracyclic monomers such as 7,8-benzotricyclo[4.3.0.1^{2,5}]dec-3-ene (common name: methanotetrahydrofluorene; also referred to as 1,4-methano-1,4,4a,9a-tetrahydrofluorene), tetracyclo[4.4.0.1^{2,5}.1^{7,10}]dodec-3-ene (common name: tetracyclododecene), 8-ethylidenetetracyclo[4.4.0.1^{2,5}.1^{7,10}]-3-dodecene, and derivatives thereof.

Note that examples of optional substituents that can be included on rings of these norbornene-based monomers include the same substituents as given as examples of R⁹ to R¹². The norbornene-based monomer may include just one of these types of substituents or may include two or more of these types of substituents.

Note that one norbornene-based monomer may be used individually, or two or more norbornene-based monomers may be used in combination. Of these norbornene-based monomers, dicyclopentadiene and derivatives thereof are preferable, and dicyclopentadiene is more preferable.

The amount of dicyclopentadiene that is used relative to 100 mass% of the amount of all cycloolefin used in production of the cycloolefin ring-opened polymer is preferably 50 mass% or more, more preferably 80 mass% or more, and even more preferably 100 mass%.

The cycloolefin ring-opened polymer may be a copolymer that is obtained using a norbornene-based monomer such as described above and an optionally substituted monocyclic cycloolefin.

Examples of the monocyclic cycloolefin include monocyclic monoolefins such as cyclobutene, cyclopentene, cyclohexene, cycloheptene, and cyclooctene and derivatives thereof; and monocyclic diolefins such as cyclohexadiene and cyclooctadiene and derivatives thereof. Examples of optional substituents of the monocyclic cycloolefin include alkyl groups such as a methyl group and an ethyl group; alkenyl groups such as a vinyl group; alkylidene groups such as a propan-2-ylidene group; aryl groups such as a phenyl group; a hydroxy group; an acid anhydride group; a carboxy group; and alkoxycarbonyl groups such as a methoxycarbonyl group. Note that the monocyclic cycloolefin may include just one of these types of substituents or may include two or more of these types of substituents.

Moreover, one optionally substituted monocyclic cycloolefin may be used individually, or two or more optionally substituted monocyclic cycloolefins may be used in combination.

The amount of the optionally substituted monocyclic cycloolefin that is used is not specifically limited but, relative to 100 mass% of the amount of all cycloolefin used in production of the cycloolefin ring-opened polymer, is preferably 20 mass% or less, more preferably 10 mass% or less, and even more preferably 0 mass% (i.e., the cycloolefin ring-opened polymer is even more preferably a polymer obtained using only one or more norbornene-based monomers as monomers).

No specific limitations are placed on the method by which the cycloolefin ring-opened polymer is produced. For example, a known method in which one or more monomers such as described above are ring-opening polymerized using a metathesis polymerization catalyst can be adopted. This method may, for example, be a method described in JP2017-149898A.

The weight-average molecular weight (Mw) of the cycloolefin ring-opened polymer obtained as set forth above is not specifically limited but is preferably not less than 15,000 and not more than 150,000, more preferably not less than 20,000 and not more than 100,000, and even more preferably not less than 23,000 and not more than 50,000 from a viewpoint of enhancing mechanical properties (tensile strength, etc.) of an obtained shaped product or stretched film.

Moreover, the molecular weight distribution (Mw/Mn) of the cycloolefin ring-opened polymer is not specifically limited but is preferably not less than 1 and not more than 5, and more preferably not less than 1 and not more than 4 from a viewpoint of enhancing mechanical properties (tensile strength, etc.) of an obtained shaped product or stretched film.

Note that the "weight-average molecular weight (Mw)" and "number-average molecular weight (Mn)" of a polymer such as a cycloolefin ring-opened polymer referred to in the present disclosure are standard polystyrene-equivalent values according to gel permeation chromatography (GPC) with tetrahydrofuran as an eluent solvent.

A hydrogenated cycloolefin ring-opened polymer can be obtained by subjecting the cycloolefin ring-opened polymer obtained as set forth above to a hydrogenation reaction. No specific limitations are placed on the method by which the cycloolefin ring-opened polymer is hydrogenated. For example, a known method in which hydrogen is supplied into a reaction system in the presence of a hydrogenation catalyst can be adopted. This method may, for example, be a method described in JP2017-149898A.

The percentage hydrogenation in the hydrogenation reaction (proportion of main chain carbon-carbon double bonds that are hydrogenated) is not specifically limited but is preferably 70% or more, more preferably 80% or more, even more preferably 90% or more, and particularly preferably 99% or more. A higher percentage hydrogenation can improve the heat resistance of the hydrogenated cycloolefin ring-opened polymer that is obtained.

Note that the "percentage hydrogenation" in a hydrogenation reaction referred to in the present disclosure can be measured by nuclear magnetic resonance (NMR).

The weight-average molecular weight (Mw) of the hydrogenated cycloolefin ring-opened polymer obtained as set forth above is not specifically limited but, from a viewpoint of enhancing mechanical properties (tensile strength, etc.) of an obtained shaped product or stretched film, is preferably 15,000 or more, more preferably 20,000 or more, and even more preferably 23,000 or more, and is preferably 150,000 or less, more preferably 100,000 or less, and even more preferably 50,000 or less.

Moreover, the molecular weight distribution (Mw/Mn) of the hydrogenated cycloolefin ring-opened polymer is not specifically limited but is preferably not less than 1 and not more than 5, and more preferably not less than 1 and not more than 4 from a viewpoint of enhancing mechanical properties (tensile strength, etc.) of an obtained shaped product or stretched film.

The thermoplastic resin (hydrogenated cycloolefin ring-opened polymer, etc.) is preferably crystalline. By using a thermoplastic resin that is crystalline, it is possible to obtain a flame retardant thermoplastic resin composition having excellent chemical resistance and heat resistance. Moreover, by using a thermoplastic resin that is crystalline, it is possible sufficiently improve heat resistance even with a small amount of the bis(phosphine oxide) compound.

Although no specific limitations are placed on the temperature range for the melting point in the case of a crystalline thermoplastic resin, the melting point is preferably 200°C or higher, and more preferably 230°C or higher, and is preferably 290°C or lower. A thermoplastic resin that has a melting point within any of the ranges set forth above has an even better balance of formability and heat resistance.

Note that the melting point of the thermoplastic resin referred to in the present disclosure can be measured by a method described in the EXAMPLES section of the present specification.

Among crystalline thermoplastic resins, a crystalline hydrogenated cycloolefin ring-opened polymer is preferable as the thermoplastic resin in the presently disclosed flame retardant thermoplastic resin composition. Crystalline hydrogenated cycloolefin ring-opened polymers such as described in WO2012/033076A1, JP2002-249553A, and JP2007-16102A, for example, can be used as the crystalline hydrogenated cycloolefin ring-opened polymer without any specific limitations. Moreover, the crystalline hydrogenated cycloolefin ring-opened polymer may be a hydrogenated dicyclopentadiene ring-opened polymer having syndiotactic stereoregularity or a hydrogenated dicyclopentadiene ring-opened polymer having isotactic stereoregularity, but the use of a hydrogenated dicyclopentadiene ring-opened polymer having syndiotactic stereoregularity as the thermoplastic resin is preferable from viewpoints such as productivity.

Note that the hydrogenated dicyclopentadiene ring-opened polymer having syndiotactic stereoregularity can suitably be synthesized according to a method disclosed in JP2017-170735A, for example.

### <Bis(phosphine oxide) compound>

The presently disclosed flame retardant thermoplastic resin composition contains a bis(phosphine oxide) compound represented by the following formula (1) as a phosphoric flame retardant.

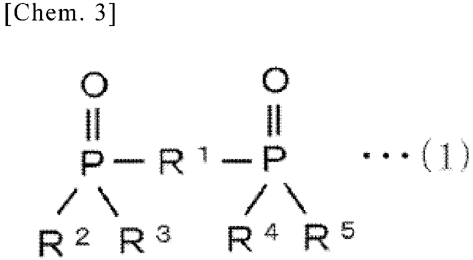

[In formula (1), R¹ is an optionally substituted alkylene group, an optionally substituted arylene group, or a divalent organic group represented by a formula: -Q¹-Ar-Q²- (Ar is an optionally substituted arylene group and Q¹ and Q² are each, independently of each other, an optionally substituted alkylene group having a carbon number of not less than 1 and not more than 10), and R² to R⁵ are each, independently of one another, an optionally substituted alkyl group, an optionally substituted aryl group, or an optionally substituted alkoxy group.]

The use of the bis(phosphine oxide) compound described above yields a flame retardant thermoplastic resin composition having excellent flame retardancy and moisture resistance. The bis(phosphine oxide) compound described above also excels in terms of having low environment impact and being capable of inhibiting deterioration of electrical properties such as dielectric properties of the resin composition.

Examples of the alkylene group in the "optionally substituted alkylene group" of R¹ include a methylene group, an ethylene group, a propylene group, and a butylene group. In particular, an alkylene group having a carbon number of not less than 1 and not more than 4 is preferable, and a methylene group or an ethylene group is more preferable as the alkylene group.

Examples of the arylene group in the "optionally substituted arylene group" of R¹ include a phenylene group, a biphenylene group, and a naphthylene group. In particular, an arylene group having a carbon number of not less than 6 and not more than 18 is preferable, an arylene group having a carbon number of not less than 6 and not more than 12 is more preferable, and a phenylene group, a biphenylene group, or a naphthylene group is even more preferable as the arylene group.

Examples of substituents in the "optionally substituted alkylene group" and the "optionally substituted arylene group" of R¹ include, but are not specifically limited to, a nitro group, a cyano group, a hydroxy group, a carboxy group, an amino group, and an alkoxy group.

Examples of the arylene group of Ar in the divalent organic group (-Q¹-Ar-Q²-) include a phenylene group, a biphenylene group, and a naphthylene group. In particular, an arylene group having a carbon number of not less than 6 and not more than 18 is preferable, an arylene group having a carbon number of not less than 6 and not more than 12 is more preferable, and a phenylene group, a biphenylene group, or a naphthylene group is even more preferable as the arylene group of Ar.

Examples of the alkylene group having a carbon number of not less than 1 and not more than 10 of Q¹ and Q² in the divalent organic group (-Q¹-Ar-Q²-) include a methylene group, an ethylene group, a propylene group, and a butylene group. In particular, an alkylene group having a carbon number of not less than 1 and not more than 4 is preferable, and a methylene group or an ethylene group is more preferable as the alkylene group having a carbon number of not less than 1 and not more than 10.

Note that Q¹ and Q² may be the same or may be different from each other, but are preferably the same.

Examples of substituents of Ar, Q¹, and Q² include, but are not specifically limited to, a nitro group, a cyano group, a hydroxy group, a carboxy group, an amino group, and an alkoxy group.

Of the examples given above, R¹ is preferably an optionally substituted arylene group or a divalent organic group represented by a formula: -Q¹-Ar-Q²-, more preferably a phenylene group, a biphenylene group, a naphthylene group, or a divalent organic group represented by a formula: -Q¹-Ar-Q²- in which Ar is a phenylene group, a biphenylene group, or a naphthylene group, even more preferably a phenylene group, a biphenylene group, a naphthylene group, or a divalent organic group represented by a formula: -CH₂-Ar-CH₂- in which Ar is a phenylene group, a biphenylene group, or a naphthylene group, and particularly preferably a divalent organic group represented by a formula: -CH₂-Ar-CH₂- in which Ar is a phenylene group.

Examples of the alkyl group in the "optionally substituted alkyl group" of R² to R⁵ include a methyl group, an ethyl group, a propyl group, and a butyl group. In particular, an alkyl group having a carbon number of not less than 1 and not more than 4 is preferable, and a methyl group or an ethyl group is more preferable as the alkyl group.

Examples of the aryl group in the "optionally substituted aryl group" of R² to R⁵ include a phenyl group, a biphenyl group, and a naphthyl group. In particular, an aryl group having a carbon number of not less than 6 and not more than 18 is preferable, an aryl group having a carbon number of not less than 6 and not more than 12 is more preferable, and a phenyl group, a biphenyl group, or a naphthyl group is even more preferable as the aryl group.

Examples of the alkoxy group in the "optionally substituted alkoxy group" of R² to R⁵ include a methoxy group, an ethoxy group, a propoxy group, and a butoxy group. In particular, an alkoxy group having a carbon number of not less than 1 and not more than 4 is preferable, and a methoxy group or an ethoxy group is more preferable as the alkoxy group.

Examples of substituents in the "optionally substituted alkyl group", the "optionally substituted aryl group", and the "optionally substituted alkoxy group" of R² to R⁵ include, but are not specifically limited to, a nitro group, a cyano group, a hydroxy group, a carboxy group, an amino group, and an alkoxy group.

Of the examples given above, R² to R⁵ are each, independently of one another, preferably an optionally substituted aryl group, more preferably a phenyl group, a biphenyl group, or a naphthyl group, and even more preferably a phenyl group. Moreover, R² to R⁵ may be the same or may be different from one another, but are preferably all the same, and are particularly preferably all phenyl groups.

Furthermore, the bis(phosphine oxide) compound is preferably a bis(diphenylphosphine oxide) compound represented by the following formula (1-1): 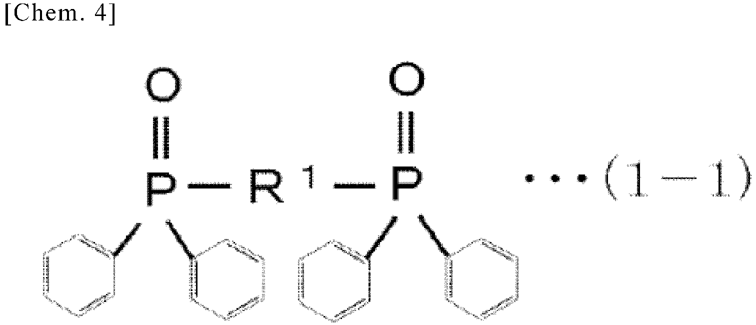 where R¹ is the same as in formula (1), more preferably a bis(diphenylphosphine oxide) compound represented by the foregoing formula (1-1) for which R¹ is a phenylene group or a divalent organic group represented by a formula: -CH₂-Ar-CH₂- (Ar is a phenylene group, a biphenylene group, or a naphthylene group), and even more preferably xylylenebis(diphenylphosphine oxide) represented by the following formula.

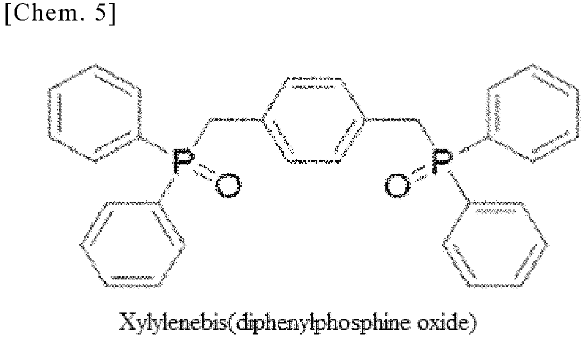

The amount of the bis(phosphine oxide) compound in the flame retardant thermoplastic resin composition is not specifically limited but is preferably 1 part by mass or more, and more preferably 5 parts by mass or more per 100 parts by mass of the thermoplastic resin, and is preferably 30 parts by mass or less, more preferably 17.5 parts by mass or less, and even more preferably 10 parts by mass or less per 100 parts by mass of the thermoplastic resin. When the content of the bis(phosphine oxide) compound is not less than any of the lower limits set forth above, flame retardancy of the flame retardant thermoplastic resin composition can be further increased. Moreover, when the content of the bis(phosphine oxide) compound is not more than any of the upper limits set forth above, it is possible to further increase moisture resistance of the flame retardant thermoplastic resin composition and obtain a flame retardant thermoplastic resin composition with which physical properties of the thermoplastic resin (for example, low hygroscopicity, electrical insulation, and impact resistance) are sufficiently displayed.

### <Other components>

The presently disclosed flame retardant thermoplastic resin composition can optionally contain other components without any specific limitations to the extent that the effects according to the present disclosure are not impaired. Examples of such other components include various types of additives.

Specific examples of additives that may be used include fillers, antioxidants, release agents, antibacterial agents, coupling agents, plasticizers, colorants, lubricants, silicon oil, foaming agents, surfactants, light stabilizers, dispersants, dispersing aids, heat stabilizers, ultraviolet absorbers, antistatic agents, crystallization nucleating agents, antifogging agents, neutralizers, decomposers, metal deactivators, antifouling agents, fibrous reinforcers (glass fiber, carbon fiber, synthetic fiber, ceramic fiber, and whiskers), plate-shaped reinforcers (mica, talc, clay, and glass flakes), and particulate reinforcers (metal oxides, carbonates, sulfates, glass beads, and carbon black). One of these additives may be used individually, or two or more of these additives may be used in combination. The content of these additives is not specifically limited and can be set as appropriate, depending on the object of addition, within a range that does not cause loss of the effects according to the present disclosure.

Examples of other components that can be contained in the presently disclosed flame retardant thermoplastic resin composition also include flame retardants other than the bis(phosphine oxide) compound described above and anti-dripping agents.

An anti-dripping agent is a compound that can inhibit dripping of molten resin composition during combustion and that can further improve flame retardancy. For example, a fluororesin may be used as an anti-dripping agent. Specifically, the fluororesin may be polytetrafluoroethylene, polyhexafluoropropylene, a tetrafluoroethylene/hexafluoropropylene copolymer, a tetrafluoroethylene/perfluoroalkyl vinyl ether copolymer, a tetrafluoroethylene/ethylene copolymer, a hexafluoropropylene/propylene copolymer, polyvinylidene fluoride, a vinylidene fluoride/ethylene copolymer, or the like. In particular, polytetrafluoroethylene, a tetrafluoroethylene/perfluoroalkyl vinyl ether copolymer, a tetrafluoroethylene/hexafluoropropylene copolymer, a tetrafluoroethylene/ethylene copolymer, or polyvinylidene fluoride is preferable, and polytetrafluoroethylene or a tetrafluoroethylene/ethylene copolymer is more preferable.

In general, a compound that is used as an anti-dripping agent is not readily combustible, and a burning rating in accordance with the UL-94 VTM standard for the compound used as an anti-dripping agent by itself is preferably "VTM-2" or higher, more preferably "VTM-1" or higher, and even more preferably "VTM-0", but is not specifically limited thereto.

Moreover, the amount of the anti-dripping agent can be set as not less than 0.01 parts by mass and not more than 1 part by mass per 100 parts by mass of the thermoplastic resin, but is not specifically limited thereto.

### <Production method of flame retardant thermoplastic resin composition>

The presently disclosed flame retardant thermoplastic resin composition can be obtained by mixing the components set forth above. Although no specific limitations are placed on the specific production method, it is preferable that the thermoplastic resin is premixed and that the bis(phosphine oxide) compound is added to the thermoplastic resin during premixing thereof.

Note that in a case in which a crystalline thermoplastic resin is used as the thermoplastic resin, a method in which the thermoplastic resin is mixed in a molten state is preferable from a viewpoint of obtaining a sufficiently mixed flame retardant thermoplastic resin composition. In the case of mixing in a molten state, the mixing is preferably performed at a temperature within a range of from 50°C higher than the glass-transition temperature of the thermoplastic resin to 250°C higher than the glass-transition temperature of the thermoplastic resin. Note that the viscosity is high and mixing is difficult when the temperature is too low, whereas degradation of the thermoplastic resin and other components tends to occur when the temperature is too high.

The flame retardant thermoplastic resin composition can be obtained as pellets by, for example, extruding the flame retardant thermoplastic resin composition in a molten state with a rod form after mixing thereof and cutting the extruded flame retardant thermoplastic resin composition to an appropriate length using a strand cutter.

### (Shaped product)

The presently disclosed shaped product is obtained through shaping of the presently disclosed flame retardant thermoplastic resin composition set forth above, normally contains a thermoplastic resin and the bis(phosphine oxide) compound described above, and optionally further contains other components such as additives. Moreover, the presently disclosed shaped product has excellent flame retardancy and moisture resistance as a result of being obtained using the flame retardant thermoplastic resin composition set forth above as a shaping material.

The shape of the shaped product is not specifically limited and can be a shape that is in accordance with the application thereof, such as a film shape, for example. Moreover, the method by which the flame retardant thermoplastic resin composition is shaped is not specifically limited and can be a known shaping method such as injection molding, extrusion molding, press forming, inflation molding, blow molding, calendering, cast molding, or compression molding, for example.

### (Stretched film)

The presently disclosed stretched film is formed using the presently disclosed flame retardant thermoplastic resin composition set forth above, normally contains a thermoplastic resin and the bis(phosphine oxide) compound described above, and optionally further contains other components such as additives. Moreover, the presently disclosed stretched film has excellent flame retardancy and moisture resistance as a result of being obtained using the flame retardant thermoplastic resin composition set forth above as a shaping material.

The stretched film can be obtained by performing stretching of a film obtained through shaping of the presently disclosed flame retardant thermoplastic resin composition and then optionally performing after treatment to perform crystallization of the thermoplastic resin and/or relieve tension in the stretched film.

Note that stretching of the film, crystallization of the thermoplastic resin, and relieving tension in the stretched film can be performed by methods described in JP2021-107508A, for example, without any specific limitations.

The thickness of the stretched film can be freely set but is preferably 10 µm or more, and is preferably 40 µm or less, and more preferably 30 µm or less. When the thickness of the stretched film is not more than any of the upper limits set forth above, this enables advantageous use as a flexible substrate or the like because the stretched film can display excellent flexibility. Moreover, the stretched film can display sufficiently good strength when the thickness thereof is not less than the lower limit set forth above.

### EXAMPLES

The following provides a more specific description of the present disclosure based on examples. However, the present disclosure is not limited to the following examples.

In the examples and comparative examples, the following methods were used to measure and evaluate the glass-transition temperature and melting point of a polymer, the molecular weight and molecular weight distribution of a polymer, the percentage hydrogenation in hydrogenation of a polymer, and the flame retardancy, dielectric properties, and moisture resistance of a film.

### <Glass-transition temperature and melting point>

The glass-transition temperature and melting point of a polymer were measured in accordance with JIS K7121 by differential scanning calorimetry with a heating rate of 10°C/min using a differential scanning calorimeter.

### <Molecular weight and molecular weight distribution>

Weight-average molecular weight (Mw) and number-average molecular weight (Mn) were determined as polystyrene-equivalent values by gel permeation chromatography (GPC) at 40°C with tetrahydrofuran as a solvent, and the molecular weight distribution (Mw/Mn) was calculated. The following measurement apparatus and column were used.
Measurement apparatus: Gel permeation chromatography (GPC) system "HLC-8220" (produced by Tosoh Corporation)
Column: H-Type Column (produced by Tosoh Corporation)

### <Percentage hydrogenation>

The percentage hydrogenation of unsaturated bonds in a polymer was determined based on ¹H-NMR measurement.

### <Flame retardancy (UL-94 VTM standard)>

A film of 100 µm in thickness obtained in each example or comparative example was cut out as a belt shape of 50 mm in width and 200 mm in length by a cutter and was wound in a circular tube shape to obtain a test specimen. The test specimen was fixed vertically using a clamp, and cotton was arranged below the test specimen. The flame of a burner was brought into contact with the bottom edge of the test specimen for 3 seconds, was then removed, and the time taken for a flame that had been lit on the test specimen to extinguish was measured. Upon the flame of the test specimen extinguishing, the flame of the burner was brought back into contact for 3 seconds for a second time, and the time taken for the flame that had been lit on the test specimen to extinguish was measured in the same way as for the first time. In addition, it was evaluated whether the cotton arranged below the test specimen ignited due to live drippings during burning.

This evaluation was performed for 5 samples and then a burning rating was given in accordance with the UL-94 VTM standard from the first and second burning times, the total burning time for the 5 samples, ignition of the cotton, and so forth. The burning ratings are VTM-0, VTM-1, VTM-2, and Sub-standard in order of highest flame retardancy (VTM-0 is highest and Sub-standard is lowest). A case in which the rating was VTM-2 or higher was evaluated as "Good", whereas as a case in which the rating was VTM-Sub-standard was evaluated as "Poor".

### <Dielectric properties>

Permittivity and dielectric loss were measured by a balanced-type circular disk resonator method with respect to a film of 100 µm in thickness obtained in each example or comparative example.

### <Moisture resistance>

A film of 100 µm in thickness obtained in each example or comparative example was placed inside of a constant-temperature constant-humidity tank having a temperature of 85°C and a humidity of 85% RH and was left at rest for 2 weeks (moisture resistance test). The film was subsequently removed from the constant-temperature constant-humidity tank, and then flame retardancy (UL-94 VTM standard) and dielectric properties were evaluated and measured in the same way as previously described.

When evaluations after a moisture resistance test are closer to evaluations when a moisture resistance test has not been performed, this indicates better moisture resistance.

### (Production Example 1: Mixture containing crystalline hydrogenated cycloolefin ring-opened polymer)

A metal pressure-resistant reactor that had been dried and then internally purged with nitrogen was charged with 154.5 parts by mass of cyclohexane, 42.8 parts by mass (30 parts by mass in terms of dicyclopentadiene) of a cyclohexane solution (concentration: 70 mass%) of dicyclopentadiene (endo isomer content: 99 mass% or more), and 1.9 parts by mass of 1-hexene, and the contents thereof were heated to 53°C. Meanwhile, 0.014 parts by mass of tetrachlorotungsten phenylimide (tetrahydrofuran) complex was dissolved in 0.70 parts by mass of toluene, and then 0.061 parts by mass of an n-hexane solution (concentration: 19 mass%) of diethylaluminum ethoxide was added to the resultant solution and was stirred therewith for 10 minutes to produce a catalyst solution. The catalyst solution was added into the aforementioned reactor, and a ring-opening polymerization reaction was carried out at 53°C for 4 hours to obtain a solution containing a dicyclopentadiene ring-opened polymer.

The polymerization reaction was stopped by adding 0.037 parts by mass of 1,2-ethanediol as an inhibitor to 200 parts by mass of the obtained solution of the dicyclopentadiene ring-opened polymer and performing stirring thereof at 60°C for 1 hour. Thereafter, 1 part by mass of a hydrotalcite-like compound (KYOWAAD^{®} 2000 (KYOWAAD is a registered trademark in Japan, other countries, or both) produced by Kyowa Chemical Industry Co., Ltd.) was added as an adsorbent, heating was performed to 60°C, and stirring was performed for 1 hour. Next, 0.4 parts by mass of a filter aid (Radiolite^{®} #1500 (Radiolite is a registered trademark in Japan, other countries, or both) produced by Showa Chemical Industry Co., Ltd.) was added and the adsorbent was filtered off using a PP pleated cartridge filter (TCP-HX produced by Advantec Toyo Kaisha, Ltd.) to obtain a solution containing the dicyclopentadiene ring-opened polymer. Upon measuring the molecular weight of the dicyclopentadiene ring-opened polymer using a portion of this solution, the weight-average molecular weight (Mw) was 28,100 and the molecular weight distribution (Mw/Mn) was 3.21.

Next, 100 parts by mass of cyclohexane and 0.0043 parts by mass of chlorohydridocarbonyltris(triphenylphosphine)ruthenium complex as a hydrogenation catalyst were added to 200 parts by mass of the obtained solution containing the dicyclopentadiene ring-opened polymer (polymer content: 30 parts by mass), and a hydrogenation reaction was carried out at 180°C and a hydrogen pressure of 6 MPa for 4 hours. The reaction liquid was a slurry in which solid content had precipitated. Solid content and solution were separated through centrifugal separation of the reaction liquid, and then 0.1 parts by mass of pentaerythritol tetrakis[3-(3,5-di-t-butyl-4-hydroxyphenyl)propionate] as an antioxidant was added to the solid content under stirring using an agitator. Thereafter, the solid content was vacuum dried at 60°C for 24 hours to yield a mixture containing a hydrogenated cycloolefin (dicyclopentadiene) ring-opened polymer and the antioxidant. The percentage hydrogenation in the hydrogenation reaction was 99% or more. Moreover, the obtained hydrogenated cycloolefin ring-opened polymer had a glass-transition temperature of 98°C and a melting point of 262°C.

### (Production Example 2: Mixture containing amorphous hydrogenated cycloolefin ring-opened polymer)

A reactor equipped with a stirrer that had been dried and then internally purged with nitrogen was charged with 300 parts by mass of cyclohexane, 0.5 parts by mass of 1-hexene, 0.15 parts by mass of dibutyl ether, and 1.5 parts by mass of a 10 mass% cyclohexane solution of triisobutylaluminum (0.15 parts by mass in terms of ditriisobutylaluminum) and then the contents thereof were heated to 40°C. Next, the contents of the reactor were held at 40°C under stirring while a mixture of 70 parts by mass of tetracyclododecene and 30 parts by mass of dicyclopentadiene and 11 parts by mass of a 0.6 mass% cyclohexane solution of tungsten hexachloride (0.066 parts by mass in terms of tungsten hexachloride) were, concurrently to one another, added continuously into the reactor to carry out a polymerization reaction. This yielded a solution containing a ring-opened copolymer (cycloolefin ring-opened polymer) of tetracyclododecene and dicyclopentadiene. Next, 0.5 parts by mass of butyl glycidyl ether and 0.2 parts by mass of isopropyl alcohol as inhibitors were added to this solution and were stirred therewith at 40°C for 1 hour to stop the polymerization reaction.

Upon measuring the molecular weight of the cycloolefin ring-opened polymer using a portion of the resultant polymerization reaction liquid, the weight-average molecular weight (Mw) was 42,000 and the molecular weight distribution (Mw/Mn) was 2.30.

Next, 100 parts by mass of cyclohexane and 4 parts by mass of diatomaceous earth-supported nickel catalyst (T8400RL; supported nickel ratio: 57%; produced by Sud-Chemie Catalysts Japan Inc.) was added to 200 parts by mass of the obtained polymerization reaction liquid (polymer content: 30 parts by mass), and a hydrogenation reaction was carried out at 170°C and a hydrogen pressure of 4.5 MPa for 5 hours. Next, the reaction solution was filtered to remove the hydrogenation catalyst, and then 0.1 parts by mass of pentaerythritol tetrakis[3-(3,5-di-t-butyl-4-hydroxyphenyl)propionate] as an antioxidant was added to the filtrate. Volatile content was evaporated from the solution under conditions of a temperature of 260°C (533°K), a pressure of 1 kPa or lower, and a residence time of 1.2 hours using a thin film evaporator (Filmtruder produced by Buss) to obtain a mixture containing a hydrogenated cycloolefin ring-opened polymer of tetracyclododecene and dicyclopentadiene and the antioxidant.

The percentage hydrogenation in the hydrogenation reaction was 99% or more. Moreover, the glass-transition temperature of the obtained hydrogenated cycloolefin ring-opened polymer was 142°C. Note that a melting point was not observed.

### (Preparation of flame retardants)

The following phosphoric flame retardants were prepared.

### <Bis(phosphine oxide) compound>

p-Xylylenebis(diphenylphosphine oxide) indicated by following formula (PQ-60 produced by Chin Yee Chemical Industries Co., Ltd.)

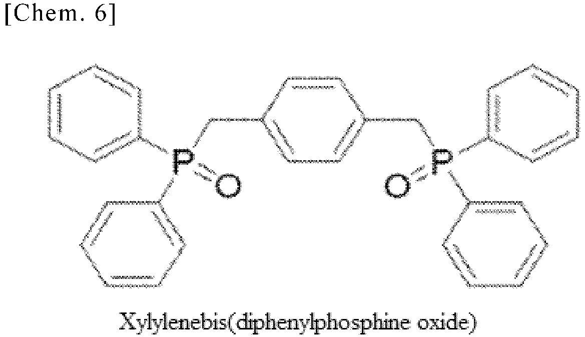

### <Organic phosphinate flame retardants>

### [Organic phosphinate flame retardant (1)]

Aluminum tris(diethylphosphinate) indicated by following formula (V) (Exolit^{®} OP 935 (Exolit is a registered trademark in Japan, other countries, or both) produced by Clariant)

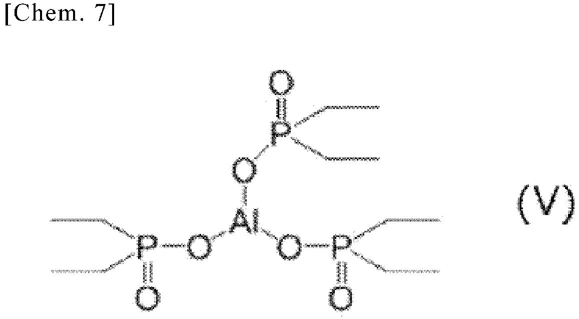

### [Organic phosphinate flame retardant (2)]

Aluminum tris(diethylphosphinate) indicated by foregoing formula (V) (Exolit^{®} OP 945 produced by Clariant; product having smaller primary particle diameter than the organic phosphinate flame retardant (1))

### (Example 1)

### <Production of shaping material>

A twin screw kneading extruder (TEM-37BS produced by Toshiba Machine Co., Ltd.) was used to knead 100.33 parts by mass of the mixture obtained in Production Example 1 (amount of crystalline hydrogenated cycloolefin ring-opened polymer: 100 parts by mass) and 10 parts by mass of p-xylylenebis(diphenylphosphine oxide) (PQ-60) as a phosphoric flame retardant and to obtain strands (molten resin in the form of rods). The obtained strands were cut by a strand cutter to obtain a shaping material (flame retardant thermoplastic resin composition) in the form of pellets. The operating conditions of the twin screw kneading extruder were as follows.
- Barrel temperature setting: 270°C to 290°C
- Screw speed: 200 rpm
- Screw diameter: 37 mm
- L/D: 50

Note that a side feeder of the twin screw kneading extruder was used to add (side feed) the phosphoric flame retardant to the hydrogenated cycloolefin ring-opened polymer during kneading thereof (i.e., the hydrogenated cycloolefin ring-opened polymer was premixed, and the phosphoric flame retardant was added to the hydrogenated cycloolefin ring-opened polymer being premixed).

### <Production of film>

The shaping material in the form of pellets that was obtained as described above was used in film formation by a film extruder (produced by GSI Creos Corporation; hanger manifold type T-die film melt-extrusion molding machine including screw having a screw diameter of 20 mm, a compression ratio of 3.1, and L/D of 30) to obtain a film (shaped product) of 100 µm in thickness.

Flame retardancy, dielectric properties, and moisture resistance were evaluated for the obtained film. The results are shown in Table 1.

### (Examples 2 and 3)

Production of a shaping material and production of a film were performed in the same way as in Example 1 with the exception that the amount of p-xylylenebis(diphenylphosphine oxide) (PQ-60) used as a phosphoric flame retardant was changed to 15 parts by mass (Example 2) or 20 parts by mass (Example 3). Evaluations were conducted in the same manner as in Example 1. The results are shown in Table 1.

### (Example 4)

Production of a shaping material and production of a film were performed in the same way as in Example 1 with the exception that the mixture obtained in Production Example 2 was used such that the amount of the amorphous hydrogenated cycloolefin ring-opened polymer was 100 parts by mass instead of the mixture containing the crystalline hydrogenated cycloolefin ring-opened polymer that was obtained in Example 1. Evaluations were conducted in the same manner as in Example 1. The results are shown in Table 1.

### (Examples 5 and 6)

Production of a shaping material and production of a film were performed in the same way as in Example 1 with the exception that the amount of p-xylylenebis(diphenylphosphine oxide) (PQ-60) used as a phosphoric flame retardant was changed to 17.5 parts by mass (Example 5) or 5 parts by mass (Example 6). Evaluations were conducted in the same manner as in Example 1. The results are shown in Table 1.

### (Comparative Example 1)

Production of a shaping material and production of a film were performed in the same way as in Example 1 with the exception that a phosphoric flame retardant was not used. Evaluations were conducted in the same manner as in Example 1. The results are shown in Table 1.

### (Comparative Example 2)

Production of a shaping material and production of a film were performed in the same way as in Example 1 with the exception that 10 parts by mass of aluminum tris(diethylphosphinate) (Exolit^{®} OP 935; organic phosphinate flame retardant (1)) was used instead of p-xylylenebis(diphenylphosphine oxide) (PQ-60) as a phosphoric flame retardant. Evaluations were conducted in the same manner as in Example 1. The results are shown in Table 1.

### (Comparative Example 3)

Production of a shaping material and production of a film were performed in the same way as in Example 1 with the exception that 10 parts by mass of aluminum tris(diethylphosphinate) (Exolit^{®} OP 945; organic phosphinate flame retardant (2)) was used instead of p-xylylenebis(diphenylphosphine oxide) (PQ-60) as a phosphoric flame retardant. Evaluations were conducted in the same manner as in Example 1. The results are shown in Table 1.

### (Comparative Examples 4 and 5)

Production of a shaping material and production of a film were performed in the same way as in Comparative Example 2 or Comparative Example 3 with the exception that the used amount of the phosphoric flame retardant was set as 20 parts by mass. Evaluations were conducted in the same manner as in Example 1. The results are shown in Table 1.

**[Table 1]**

| | | | | Example 1 | Example 2 | Example 3 | Example 4 | Example 5 | Example 6 | Comparative Example 1 | Comparative Example 2 | Comparative Example 3 | Comparative Example 4 | Comparative Example 5 |
|---|---|---|---|---|---|---|---|---|---|---|---|---|---|---|
| Thermoplastic resin | Crystalline hydrogenated cycloolefin ring-opened polymer [parts by mass] | | | 100 | 100 | 100 | - | 100 | 100 | 100 | 100 | 100 | 100 | 100 |
| | Amorphous hydrogenated cycloolefin ring-opened polymer [parts by mass] | | | - | - | - | 100 | - | - | - | - | - | - | - |
| Antioxidant | Pentaerythritol tetrakis[3-(3,5-di-t-butyl-4-hydroxyphenyl)propionate] [parts by mass] | | | 0.33 | 0.33 | 0.33 | 0.33 | 0.33 | 0.33 | 0.33 | 0.33 | 0.33 | 0.33 | 0.33 |
| Phosphoric flame retardant | Bis(phosphine oxide) compound | | PQ-60 [parts by mass] | 10 | 15 | 20 | 10 | 17.5 | 5 | - | - | - | - | - |
| | Organic phosphinate flame retardant (1) | | OP 935 [parts by mass] | - | - | - | - | - | - | - | 10 | - | 20 | - |
| | Organic phosphinate flame retardant (2) | | OP 945 [parts by mass] | - | - | - | - | - | - | - | - | 10 | - | 20 |
| Evaluation | Flame retardancy | | | Good | Good | Good | Good | Good | Good | Poor | Poor | Poor | Good | Good |
| | Dielectric properties | Permittivity Dk @10 GHz | | 2.1 | 2.2 | 2.1 | 2.1 | 2.1 | 2.1 | 2.1 | 2.1 | 2.1 | 2.2 | 2.2 |
| | | Dielectric loss Df@10 GHz | | 0.0006 | 0.0007 | 0.0007 | 0.0006 | 0.0007 | 0.0006 | 0.0006 | 0.0009 | 0.0009 | 0.0012 | 0.0012 |
| | Moisture resistance | Flame retardancy | | Good | Good | Good | Good | Good | Good | Poor | Poor | Poor | Poor | Poor |
| | | Dielectric properties | Permittivity Dk @10 GHz | 2.1 | 2.2 | 2.1 | 2.1 | 2.1 | 2.1 | 2.1 | 2.1 | 2.1 | 2.2 | 2.2 |
| | | | Dielectric loss Df @10 GHz | 0.0006 | 0.0007 | 0.0008 | 0.0006 | 0.0007 | 0.0006 | 0.0006 | 0.0010 | 0.0010 | 0.0013 | 0.0013 |

It can be seen from Table 1 that in Examples 1 to 6 in which a bis(phosphine oxide) compound is used as a phosphoric flame retardant, a shaped product having excellent flame retardancy and moisture resistance is obtained compared to in Comparative Example 1 in which a phosphoric flame retardant is not used and Comparative Examples 2 to 5 in which an organic phosphinate flame retardant is used as a phosphoric flame retardant.

### INDUSTRIAL APPLICABILITY

According to the present disclosure, it is possible to provide a flame retardant thermoplastic resin composition having increased flame retardancy while also having improved moisture resistance.

Moreover, according to the present disclosure, it is possible to provide a shaped product having excellent flame retardancy and moisture resistance and a stretched film having excellent flame retardancy and moisture resistance.

## Claims

1. A flame retardant thermoplastic resin composition comprising:
a thermoplastic resin; and
a bis(phosphine oxide) compound represented by formula (1), shown below, 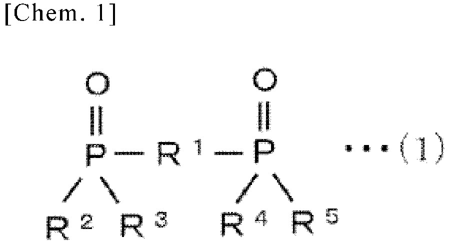 where, in formula (1):
R¹ is an optionally substituted alkylene group, an optionally substituted arylene group, or a divalent organic group represented by a formula: -Q¹-Ar-Q²-, where Ar is an optionally substituted arylene group and Q¹ and Q² are each, independently of each other, an optionally substituted alkylene group having a carbon number of not less than 1 and not more than 10; and
R² to R⁵ are each, independently of one another, an optionally substituted alkyl group, an optionally substituted aryl group, or an optionally substituted alkoxy group.

2. The flame retardant thermoplastic resin composition according to claim 1, wherein R² to R⁵ are each, independently of one another, an optionally substituted aryl group.

3. The flame retardant thermoplastic resin composition according to claim 1 or 2, wherein content of the bis(phosphine oxide) compound is 17.5 parts by mass or less per 100 parts by mass of the thermoplastic resin.

4. The flame retardant thermoplastic resin composition according to any one of claims 1 to 3, wherein the thermoplastic resin is a polyolefin resin.

5. The flame retardant thermoplastic resin composition according to claim 4, wherein the polyolefin resin is a hydrogenated cycloolefin ring-opened polymer.

6. The flame retardant thermoplastic resin composition according to any one of claims 1 to 5, wherein the thermoplastic resin is crystalline.

7. A shaped product obtained through shaping of the flame retardant thermoplastic resin composition according to any one of claims 1 to 6.

8. A stretched film formed using the flame retardant thermoplastic resin composition according to any one of claims 1 to 6.
